# EUROPEAN PATENT APPLICATION

(11) **EP 4 345 965 A2**
(43) Date of publication of application: **03.04.2024**
(21) Application number: 23199426.0
(22) Date of filing: 25.09.2023
(51) Int. Cl.: H01M 10/04, H01M 10/613, H01M 10/647, H01M 10/653, H01M 50/211, H01M 50/242, H01M 50/291, H01M 50/293

(54) **BATTERY MODULE AND MANUFACTURING METHOD THEREOF**

(30) Priority: 28.09.2022 KR 20220123279
(71) Applicant: SK On Co., Ltd., Seoul 03161 (KR)
(72) Inventor: NOH, Yun Joo, 34124 Daejeon (KR); KIM, Dong Min, 34124 Daejeon (KR); KIM, Won Kyeong, 34124 Daejeon (KR)
(74) Representative: Bird & Bird LLP

(57) **Abstract**

Battery modules and manufacturing methods of battery modules are disclosed. In one embodiment, a battery module includes a battery cell including an electrode assembly including electrodes, an exterior material surrounding the electrode assembly, and at least one protruding part disposed on a one surface of the exterior material, a base plate comprising a cell mounting part and at least one recessed part arranged at a portion of the cell mounting part, the cell mounting part is structured to mount the battery cells to the battery module, and a heat transfer member disposed between the at least one recessed part and the at least one protruding part.

## Description

### TECHNICAL FIELD

The technology and implementations disclosed in this patent document generally relate to a secondary battery, and more particularly, to a battery module and a manufacturing method thereof.

### BACKGROUND

The rapid growth of portable devices and electric vehicles has brought increasing demands for secondary batteries for electronic devices such as smart phones, laptops, electric vehicles, and drones.

Battery power supplies for electric vehicles and other applications using secondary batteries can include a battery module that include one or more rechargeable battery cells.

### SUMMARY

Embodiments of the disclosed technology provide a battery module with improved stability of a battery cell and a manufacturing method thereof.

In an aspect of the disclosed technology, a battery module includes a battery cell including an electrode assembly, an exterior material surrounding the electrode assembly, and at least one protruding part disposed on one, preferably a bottom, surface of the exterior material, a base plate comprising a cell mounting part and at least one recessed part arranged at a portion of the cell mounting part, the cell mounting part is structured to mount the battery cells thereon, preferably to the battery module, and a heat transfer member disposed between the at least one recessed part and the at least one protruding part.

The bottom surface of the exterior material preferably faces the bottom plate of the base plate.

In an embodiment, the at least one recessed part may include an accommodating part and a head, wherein the accommodating part may be structured to be inserted into a penetration hole of the base plate, and the head may be structured to be connected to an upper surface of the accommodating part and in contact with an upper surface of the base plate.

In an embodiment, the at least one recessed part may include a first recessed part located at one end of the cell mounting part and a second recessed part located at another end of the cell mounting part, and the at least one protruding part may include, on the one surface of the exterior material, a first protruding part disposed at a location corresponding to the first recessed part and a second protruding part disposed at a location corresponding to the second recessed part. In an assembled state of the battery module the first protruding part may be accommodated in the first recessed part and a second protruding part may be accommodated in the second recessed part.

In an embodiment, the heat transfer member may include at least one of a first heat transfer member disposed between the first recessed part and the first protruding part and a second heat transfer member disposed between the second recessed part and the second protruding part.

In an embodiment, the heat transfer member may include a third heat transfer member disposed between a region other than the first protruding part and the second protruding part on the one surface of the exterior material, and the cell mounting part.

In an embodiment, the exterior material may include a first sealing part disposed at one end of the electrode assembly and a second sealing part disposed at another end of the electrode assembly, and the first protruding part may be located on a bottom surface of the first sealing part, and the second protruding part is located on a bottom surface of the second sealing part. In an assembled state of the battery module the first sealing part and the second sealing part of the electrode assembly are facing the end plates of the base plate.

In an embodiment, the base plate may include a bottom plate supporting the cell mounting part and the at least one recessed part, a first side plate coupled to a first end of the bottom plate, and a second side plate coupled to a second end of the bottom plate.

In an embodiment, the battery module may further include a cover plate located over or above the battery cells, preferably in an assembled state of the battery module and preferably when the battery module is used. A first end of the cover plate may be coupled to an upper end of the first side plate, and a second end of the cover plate may be coupled to an upper end of the second side plate.

In an embodiment, the battery may further include a first electrode tab connected to a first part of the electrode assembly as part of the battery cell, a second electrode tab, separated from the first electrode tab, and connected to a second part of the electrode assembly as part of the battery cell, a first busbar assembly disposed between the first side plate and the battery cell, and connected to the first electrode tab of the battery cell, and a second busbar assembly disposed between the second side plate and the battery cell, and connected to the second electrode tab of the battery cell.

In another aspect of the disclosed technology, a battery module includes a base plate that includes a plurality of cell regions each including a cell mounting part, recessed parts having a lower height than the cell mounting part, and a heat transfer member applied to at least one of the recessed parts, and a battery cell group including a plurality of battery cells stacked in a row, each of the plurality of battery cells including an electrode assembly that includes electrodes of a battery cell, an exterior material surrounding the electrode assembly, and protruding parts disposed on a one surface of the exterior material, wherein the recessed parts of the base plate are structured to accommodate corresponding protruding parts of the plurality of battery cells.

In an embodiment, each of the recessed parts may include an accommodating part and a head, wherein the accommodating part may be structured to be inserted into a may include hole of the base plate, and the head may be structured to be connected to an upper surface of the accommodating part and in contact with an upper surface of the base plate.

In an embodiment, the recessed parts may include a first recessed part located at one end of the cell mounting part and a second recessed part located at another end of the cell mounting part, and the protruding parts may include, on the one surface of the exterior material, a first protruding part disposed at a location corresponding to the first recessed part and a second protruding part disposed at a location corresponding to the second recessed part.

In an embodiment, the heat transfer member may be disposed at least at one of a location between the first recessed part and the first protruding part or a location between the second recessed part and the second protruding part.

In an embodiment, the heat transfer member may be additionally disposed at a location between a region other than the first protruding part and the second protruding part on the one surface of the exterior material, and the cell mounting part.

In an embodiment, the plurality of cell regions may include a first cell region and a second cell region adjacent to each other, and the heat transfer member may be additionally disposed at a region between a recessed part of the first cell region and a recessed part of the second cell region in the base plate.

In another aspect of the disclosed technology, a manufacturing method of a battery module includes applying a material corresponding to a heat transfer member to at least one of a plurality of recessed parts and a cell mounting part included in each of a plurality of cell regions of a base plate in the battery module, and disposing a plurality of battery cells in the plurality of cell regions such that protruding parts disposed on a bottom part of each of a plurality of battery cells are accommodated in the plurality of recessed parts. Herein, the battery module includes a battery cell and a base plate. In addition, the battery cell comprises an electrode assembly that includes at least one anode and at least one cathode, an exterior material surrounding the electrode assembly, and at least one protruding part disposed on one surface of the exterior material. Further, the base plate comprises a cell mounting part and at least one recessed part arranged at a portion of the cell mounting part, the cell mounting part is structured to mount the battery cells to the battery module.

In an embodiment, inserting the recessed parts into corresponding penetration holes disposed in the base plate before applying the material corresponding to the heat transfer member to at least one of the plurality of recessed parts, wherein each of the plurality of recessed parts includes an accommodating part structured to be inserted into each of the penetration holes and a head contacting a peripheral region of the penetration holes in the base plate.

In an embodiment, heads of the plurality of recessed parts may be integrally connected to each other.

In an embodiment, the plurality of cell regions may include a first cell region and a second cell region adjacent to each other, and the applying of the heat transfer member may include after applying the heat transfer member to the recessed part of the first cell region, applying the heat transfer member to a region between the recessed part of the first cell region and the recessed part of the second cell region in the base plate, and after applying the heat transfer member to the recessed part of the second cell region, applying the heat transfer member to the cell mounting part of the second cell region.

In an embodiment, the plurality of cell regions may include a first cell region and a second cell region adjacent to each other, and the applying of the heat transfer member may include after applying the heat transfer member to the recessed part of the first cell region, applying the heat transfer member to a region between the recessed part of the first cell region and the recessed part of the second cell region in the base plate, and applying the heat transfer member to the cell mounting part of the second cell region.

Embodiments of the disclosed technology may provide a battery module that includes battery cells with improved stability and a manufacturing method thereof.

Embodiments of the disclosed technology may improve the physical stability of the battery cell in the battery module when there is a physical vibration or shock.

Embodiments of the disclosed technology may improve heat dissipation efficiency of battery cells and extend the lifespan of battery cells.

### BRIEF DESCRIPTION OF THE DRAWINGS

The technology disclosed in this patent document can be implement to provide battery modules with rechargeable battery cells for improved battery operations and performance and may be used in certain ways to improve the chemical and mechanical stability of a battery cell in an environment exposed to physical vibrations or shocks, especially in some battery applications with large capacity secondary batteries.

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is an exploded view illustrating an example of a battery module based on an embodiment of the disclosed technology.
FIG. 2 is a diagram illustrating an example of a battery module based on an embodiment of the disclosed technology.
FIG. 3 is a diagram illustrating an example of a battery cell based on an embodiment of the disclosed technology.
FIGS. 4A to 4D are diagrams illustrating an example of a base plate based on an embodiment of the disclosed technology.
FIGS. 5A to 5D are diagrams illustrating an example of a heat transfer member based on an embodiment of the disclosed technology.
FIGS. 6A to 6D are diagrams illustrating an example coupling of a battery cell and a base plate based on an embodiment of the disclosed technology.
FIG. 7 is a diagram illustrating an example of a manufacturing method of a battery module based on an embodiment of the disclosed technology.

### DETAILED DESCRIPTION

The specific structural or functional description disclosed herein is merely illustrative for the purpose of describing embodiments according to the concept of the disclosed technology. In addition, the embodiments according to the concept of the disclosed technology can be implemented in various forms. In addition, the concept of the disclosed technology cannot be construed as limited to the embodiments set forth herein.

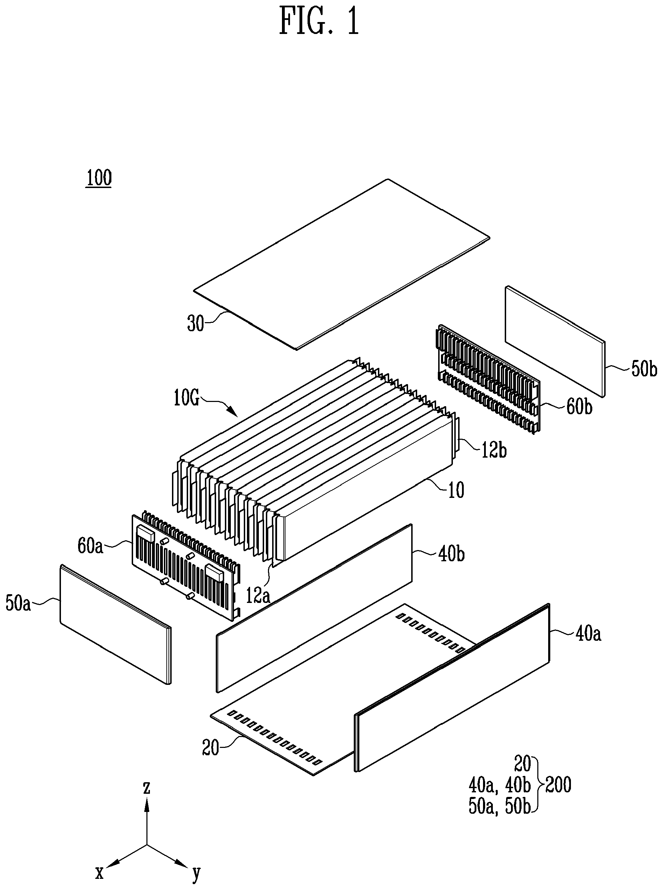

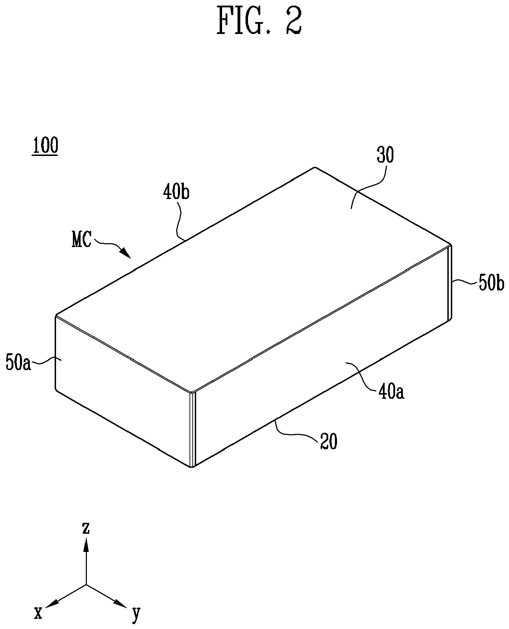

FIG. 1 is an exploded view illustrating an example of a battery module based on an embodiment of the disclosed technology. FIG. 2 is a diagram illustrating an example of a battery module based on an embodiment of the disclosed technology.

Referring to FIGS. 1 and 2, a battery module 100 based on an embodiment of the disclosed technology may include a battery cell group 10G, a module case MC, and busbar assemblies 60a, 60b.

The battery cell group 10G may include at least one battery cell 10.

The battery cell 10 may include an electrode assembly and an exterior material. The electrode assembly may include electrodes for the battery cell 10, including, e.g., at least one cathode and at least one anode (there is an electrolyte between the cathode and anode). The exterior material may partially or completely surround the electrode assembly. The battery cell 10 may include electrode tabs 12a, 12b which are electrically connected to respective electrodes of the cathode and the anode of the electrode assembly for electrical connection to receive or output electrical power and may be exposed to the outside of the exterior material. The first electrode tab 12a may be electrically connected to one of the cathode and the anode of the electrode assembly, and the second electrode tab 12b may be electrically connected to the other of the cathode and the anode.

In some implementations, the battery cell group 10G includes a plurality of battery cells 10 stacked in one direction. For example, the plurality of battery cells 10 may be stacked along the y-axis direction. In an embodiment, an insulator may be disposed between the battery cell 10 and another battery cell. Here, the y-axis direction may be a width direction of the battery module.

The module case MC may include a base plate 200 and a cover plate 30. The base plate 200 may include a bottom plate 20. In an embodiment, the base plate 200 may further include at least one of an end plate 40a, 40b and a side plate 50a, 50b. For example, the bottom plate 20, the cover plate 30, the end plate 40a, 40b, and the side plate 50a, 50b may be coupled to each other to form an internal space accommodating the battery cell group 10G. The bottom plate 20, the cover plate 30, the end plate 40a, 40b, and the side plate 50a, 50b may protect the battery cell group 10G accommodated in the internal space from external shocks or foreign substances. The bottom plate 20, the cover plate 30, the end plates 40a, 40b, and the side plate 50a, 50b may be formed using a material such as aluminum, iron or polymer.

The bottom plate 20 may be located below the battery cell group 10G. The bottom plate 20 may include a cell mounting region on which the battery cell 10 is mounted. The bottom plate 20 may support the mounted battery cell group 10G. In an embodiment, the bottom plate 20 may have a high thermal conductivity.

The bottom plate 20 may include a heat transfer member applied to the cell region. The heat transfer member may have an adhesive strength and thermal conductivity greater than or equal to a reference value. For example, the reference value may be 0.8 W/mK, and the material of the heat transfer member may be an epoxy or urethane-based material. Through the heat transfer member disposed at a location of the cell regions, the battery cell 10 may be fixed in the cell region.

The cover plate 30 may be located over or above the battery cells group 10G. For example, the bottom plate 20 and the cover plate 30 may be disposed with the battery cell group 10G interposed therebetween along the z-axis direction. Here, the z-axis direction may be a height direction.

The end plate 40a, 40b may include a first end plate 40a and a second end plate 40b. The first end plate 40a may be located at the front of the battery cell group 10G, and the second end plate 40b may be located at the rear of the battery cell group 10G. For example, first end plate 40a and the second end plate 40b may be located on opposite sides of the battery cell group 10G. For example, the first end plate 40a and the second end plate 40b may be disposed with the battery cell group 10G interposed therebetween along the y-axis direction. Here, the y-axis direction may be the direction in which the battery cell 10 is stacked.

The side plate 50a, 50b may include a first side plate 50a and a second side plate 50b. The first side plate 50a may be located on the left side of the battery cell group 10G, and the second side plate 50b may be located on the right side of the battery cell group 10G. For example, the first side plate 50a and the second side plate 50b may be located on opposite sides of the battery cell group 10G. For example, the first side plate 50a and the second side plate 50b may be located on sides of the battery cell group 10G which are different from the sides of the battery cell group 10G on which the first end plate 40a and the second end plate 40b may be located. For example, the first side plate 50a and the second side plate 50b may be disposed with the battery cell group 10G interposed therebetween along the x-axis direction. Here, the x-axis direction may be a length direction of the battery module.

In an embodiment, the bottom plate 20 may be coupled to the end plate 40a, 40b and the side plate 50a, 50b through fastening members such as bolts or clamps. In an embodiment, the bottom plate 20 may be integrally supporting at least one of the end plate 40a, 40b and the side plate 50a, 50b. In an embodiment, at least one of the cover plate 30, the end plate 40a, 40b and the side plate 50a, 50b may be omitted.

The busbar assembly 60a, 60b may electrically connect the plurality of battery cells 10. The bus bar assembly 60a, 60b may include a first busbar assembly 60a and a second busbar assembly 60b. The first busbar assembly 60a may be electrically connected to the first electrode tab 12a of the battery cell 10, and the second busbar assembly 60b may be electrically connected to the second electrode tab 12b. In an embodiment, the busbar assembly 60a, 60b may be disposed between the side plate 50a, 50b and the battery cell group 10G.

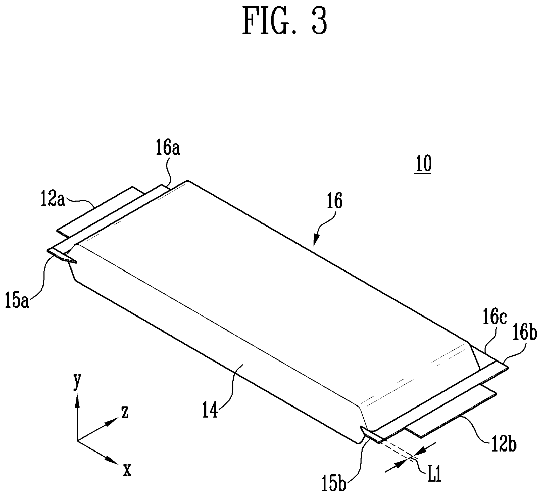

FIG. 3 is a diagram illustrating an example of a battery cell based on an embodiment of the disclosed technology.

Referring to FIG. 3, the battery cell 10 may include an electrode assembly (not shown), an electrode tab 12a, 12b, at least one protruding part 15a, 15b, and an exterior material 16.

The electrode assembly may be accommodated in the internal space disposed by the exterior material 16. The electrode assembly may include electrodes for the battery cell such as at least one cathode and at least one anode, a separator disposed between the cathode and the anode, and an electrolyte. The number of cathodes and the number of anodes may be one or more. The electrode assembly may have a structure in which the cathode and the anode are alternately stacked with a separator interposed therebetween.

The electrode tab 12a, 12b may include a first electrode tab 12a and a second electrode tab 12b. In an embodiment, the first electrode tab 12a and the second electrode tab 12b may be disposed to protrude outwardly from different ends of the exterior material 16. For example, the first electrode tab 12a may protrude from the left end of the exterior material 16 in the negative x-axis direction, and the second electrode tab 12b may protrude from the right end of the exterior material 16 in the positive x-axis direction. However, this is only an example, and the first electrode tab 12a and the second electrode tab 12b may be disposed to protrude outwardly from the same end of the exterior material 16.

The exterior material 16 may surround the electrode assembly and protect the electrode assembly.

The exterior material 16 may include a sealing part 16a, 16b, 16c. The sealing part 16a, 16b, 16c may be disposed at the outer end of the electrode assembly. The sealing part 16a, 16b, 16c may be a part where a part of the exterior material 16 and another part are bonded to each other. The sealing part 16a, 16b, 16c may be disposed by bonding in various ways such as adhesive, heating, or compression.

In an embodiment, the sealing part 16a, 16b, 16c may include a first sealing part 16a, a second sealing part 16b, and a third sealing part 16c. The first sealing part 16a may be disposed at one end of the electrode assembly, and the second sealing part 16b may be disposed at the other end of the electrode assembly. The third sealing part 16c may be disposed at one end of the electrode assembly, different from the first sealing part 16a and the second sealing part 16b.

The exterior material 16 may include a close contact part 14. The close contact part 14 may be mounted on a cell mounting part of the bottom plate 20. The close contact part 14 may be located at the bottom end of the electrode assembly. In an embodiment, the close contact part 14 may be a part in which the exterior material 16 is folded. In an embodiment, the close contact part 14 may be a part where the exterior material 16 is bonded or adhered.

The protruding parts 15a, 15b may be disposed on the one surface of the exterior material 16. The one surface of the exterior material 16 may be a surface facing the upper surface of the bottom plate 20. Herein, the one surface of the exterior material may be a bottom surface of the exterior material. The protruding part 15a, 15b may protrude from the close contact part 14 by a set length. For example, the protruding part 15a, 15b may protrude more than the close contact part 14 by L1 in the -z-axis direction.

The protruding part 15a, 15b may be accommodated in the recessed part of the bottom plate 20.

In an embodiment, the protruding part 15a, 15b may include a first protruding part 15a and a second protruding part 15b. The first protruding part 15a may be accommodated in the first recessed part of the bottom plate 20, and the second protruding part 15b may be accommodated in the second recessed part of the bottom plate 20.

In an embodiment, the first protruding part 15a may be located on the bottom surface of the first sealing part 16a, and the second protruding part 15b may be located on the bottom surface of the second sealing part 16b. In an embodiment, the first sealing part 16a may be disposed at the left end of the electrode assembly where the first electrode tab 12a is located, and the second sealing part 16b may be disposed at a right end of the electrode assembly where the second electrode tab 12b is located.

In an embodiment, the first protruding part 15a may be disposed at a location corresponding to the first recessed part of the bottom plate 20 on the one surface of the exterior material 16, and the second protruding part 15b may be disposed at a location corresponding to the second recessed part of the bottom plate 20 on the one surface of the exterior material 16.

Although FIG. 3 shows two protruding parts 15a, 15b, the battery cell 10 may include only one protruding part or two or more protruding parts, and one or more protruding parts 15a, 15b may be variously modified.

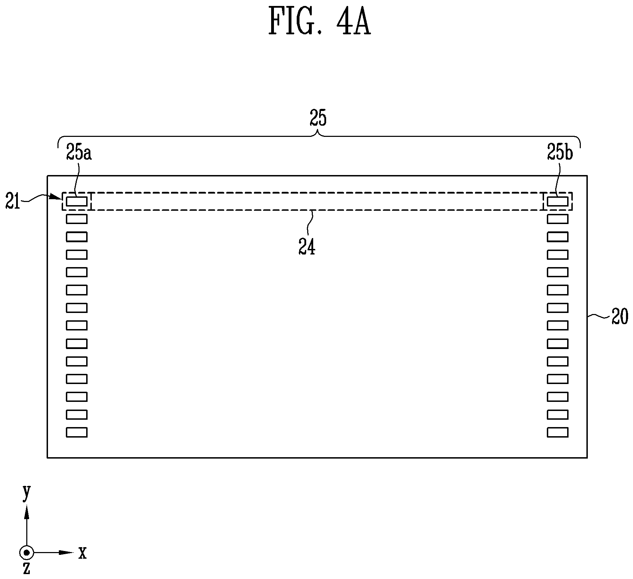

FIGS. 4A to 4D are diagrams illustrating an example of a base plate based on an embodiment of the disclosed technology.

Referring to FIGS. 1 and 4A, the base plate 200 may include a bottom plate 20. The bottom plate 20 may include at least one cell region 21. The cell region 21 may be a region in which the battery cell 10 is mounted. The number of cell regions 21 may be the same as the number of battery cells 10 to be mounted. A plurality of cell regions 21 may be arranged in a direction in which the battery cells 10 are stacked. For example, the direction in which the battery cells 10 are stacked may be in the y-axis direction.

The cell region 21 may include a cell mounting part 24 and a recessed part 25.

The close contact part 14 of the battery cell 10 may be mounted on the cell mounting part 24.

The protruding part 15a, 15b of the battery cell 10 may be accommodated in the recessed part 25. The recessed part 25 may include a region having a lower height than the cell mounting part 24. Here, the height may be the length in the z-axis direction.

The recessed part 25 may be disposed at location corresponding to the location of the protruding part 15a, 15b of the battery cell 10. The number of recessed parts 25 included in one cell region 21 may be one or more. The number of recessed parts 25 included in one cell region 21 may be the same as the number of protruding parts 15a, 15b of the battery cell 10.

In an embodiment, the recessed part 25 may include a first recessed part 25a and a second recessed part 25b. The first recessed part 25a may accommodate the first protruding part 15a of the battery cell 10, and the second recessed part 25b may accommodate the second protruding part 15b of the battery cell 10.

In an embodiment, the first recessed part 25a may be located at one end of the cell mounting part 24, and the second recessed part 25b may be located at the other end of the cell mounting part 24. For example, the first recessed part 25a may be located at the left end of the cell mounting part 24 and the second recessed part 25b may be located at the right end of the cell mounting part 24.

In an embodiment, the first recessed part 25a may be disposed at a location corresponding to the first protruding part 15a of the battery cell 10 in the bottom plate 20, and the second recessed part 25b may be disposed at a location corresponding to the second protruding part 15b of the battery cell 10 on the bottom plate 20.

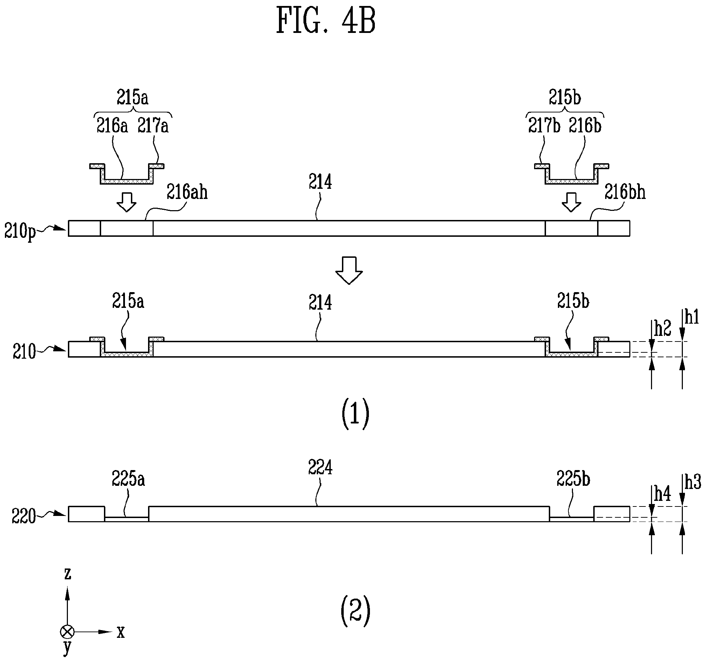

Referring to (1) of FIG. 4B, the bottom plate 210 based on an embodiment may include a cell mounting part 214 and a recessed part 215a, 215b within one cell region.

The recessed part 215a, 215b may include an accommodating part 216a, 216b, and a head 217a, 217b.

The accommodating part 216a, 216b may have a concave shape to accommodate the protruding part 15a, 15b (see FIG. 3). The height h2 of a region where the protruding part 15a, 15b (see FIG. 3) is accommodated in the accommodating part 216a, 216b may be smaller than the height h1 of the cell mounting part 214. The head 217a, 217b may be connected to the upper surface of the accommodating part 216a, 216b. The head 217a, 217b may extend in horizontal direction from the upper surface of the accommodating part 216a, 216b. The horizontal direction may be the x-axis direction or the y-axis direction.

In an embodiment, the recessed part 215a, 215b and the bottom plate 210p, which are manufactured as separate parts, may be coupled to each other.

Specifically, the accommodating part 216a, 216b may be inserted into the penetration hole 216ah, 216bh of the bottom plate 210p. In this case, the head 217a, 217b may contact the upper surface of the bottom plate 210p, 210. Due to the frictional force between the region of the recessed part 215a, 215b and the bottom plate 210p in contact with each other, the recessed part 215a, 215b may be fixed to the bottom plate 210p

Referring to (2) of FIG. 4B, the bottom plate 220 based on an embodiment may include a cell mounting part 224 and a recessed part 225a, 225b within one cell region.

The recessed part 225a, 225b is an integral part of the bottom plate 220 and may be manufactured using a processing method such as casting or cutting. In some implementations, the height h4 of the recessed part 225a, 225b may be smaller than the height h3 of the cell mounting part 224.

Hereinafter, for convenience of description, it is assumed that the bottom plate 20 of the disclosed technology is the bottom plate 210 shown in (1) of FIG. 4B.

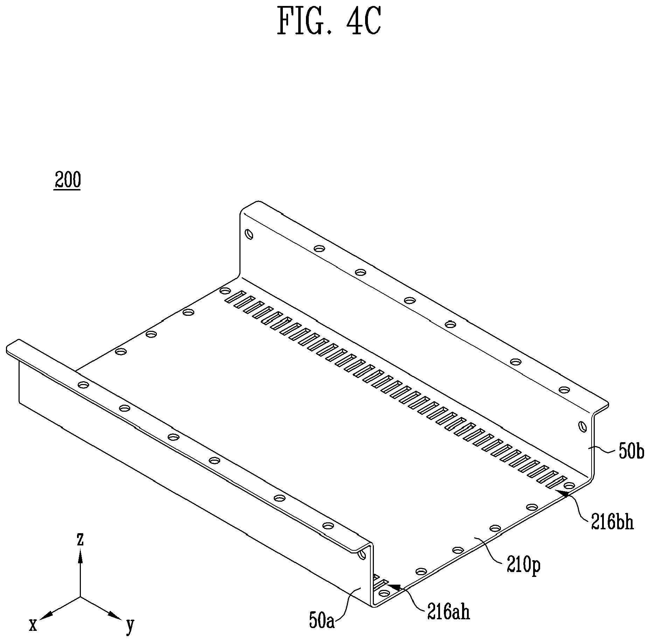

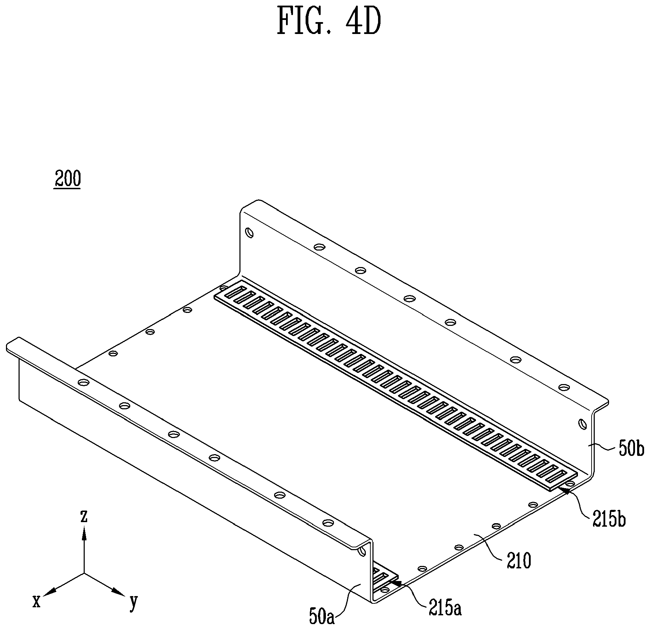

Referring to FIGS. 4C and 4D, a base plate 200 based on an embodiment may include a bottom plate 210p, 210 and a side plate 50a, 50b.

The side plate 50a, 50b may be coupled to both ends of the bottom plate 210p, 210. Here, the bottom end of the first side plate 50a may be coupled to the first end of the bottom plate 210p, 210, and the bottom end of the second side plate 50b may be coupled to the second end of the bottom plate 210p and 210. For example, the first end may be the left end and the second end may be the right end. In other words, the base plate 200 may be a U-shaped plate.

The upper end of the side plate 50a, 50b may be coupled to the cover plate. For example, the upper end of the first side plate 50a may be coupled to the first end of the cover plate, and the upper end of the second side plate 50b may be coupled to the second end of the cover plate. In an embodiment, the side plate 50a, 50b may include a bending part. The bent part includes a part where the upper end of the side plate 50a, 50b is bent, and at least one hole may be disposed therein. The side plate 50a, 50b and the cover plate may be fixed through the bolt inserted into the hole.

In an embodiment, the bottom plate 210p, 210 and the side plate 50a, 50b may be manufactured as an integral part while being coupled to each other. However, this is only an example, and the bottom plate 210p, 210 and the side plate 50a, 50b may be manufactured separately from each other. In this case, the bottom plate 210p, 210 and the side plate 50a, 50b may be coupled through the bolt. In another embodiment, the side plate 50a, 50b may be omitted.

Referring to (1) of FIG. 4B and FIG. 4C, a penetration hole 216ah, 216bh may be disposed in the bottom plate 210p based on an embodiment. The penetration hole 216ah, 216bh may be disposed by cutting a part of the bottom plate 210p using a drill or punch, or the penetration hole 216ah, 216bh may be disposed when the bottom plate 210p is manufactured using a mold. The penetration hole 216ah, 216bh may represent a hole created after removing a part of the bottom plate 210p in the height direction. Here, the height direction may be the z-axis direction.

Referring to (1) of FIG. 4B and FIG. 4D, the recessed part 215a, 215b based on an embodiment may be inserted into the penetration hole 216ah, 216bh of the bottom plates 210p, 210 and coupled to the bottom plate 210p, 210. For example, the accommodating part 216a of the first recessed part 215a may be inserted into the first penetration hole 216ah, and the accommodating part 216b of the second recessed part 215b may be inserted into the second penetration hole 216bh. In this case, the recessed part 215a, 215b and the bottom plate 210p, 210 may be coupled to each other by frictional force at the contact part between the bottom plate 210p, 210 and the accommodating part 216a, 216b. In an embodiment, an adhesive member may be applied between the contact part between the bottom plate 210p, 210 and the accommodating part 216a, 216b. In an embodiment, one recessed part 215a, 215b may include a plurality of accommodating parts 216a, 216b. In other words, the recessed part 215a, 215b may be manufactured as an integral part to cover the plurality of penetration holes 216ah, 216bh. In another embodiment, one recessed part 215a, 215b may include one accommodating part 216a, 216b. In other words, the recessed part 215a, 215b may be manufactured as a separate part to cover one penetration hole 216ah, 216bh.

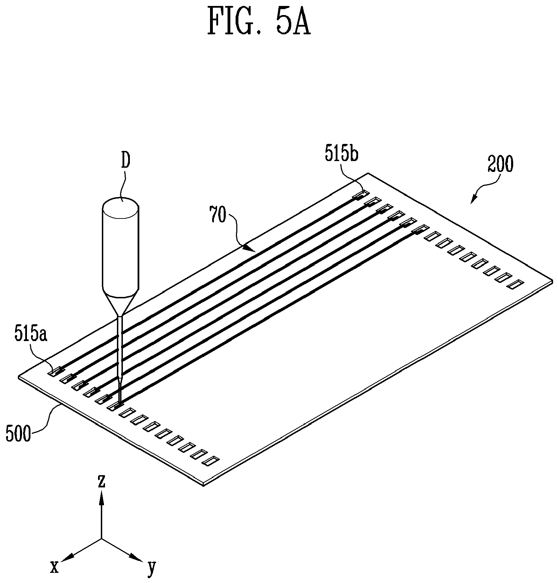

FIGS. 5A to 5D are diagrams illustrating an example of a heat transfer member based on an embodiment of the disclosed technology.

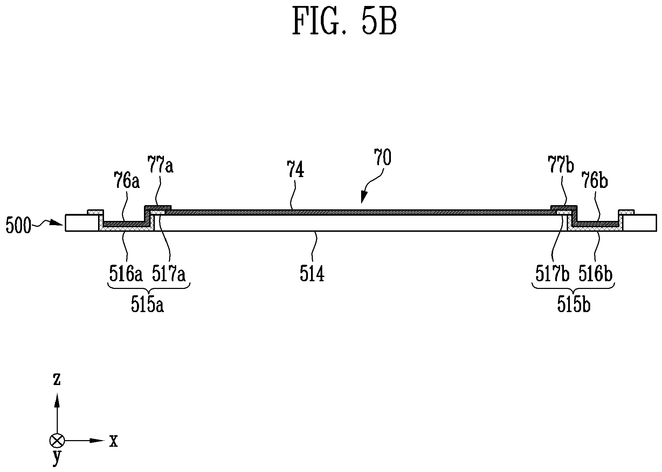

Referring to FIGS. 5A and 5B, the base plate 200 based on an embodiment may include a bottom plate 500. The bottom plate 500 may include a cell mounting part 514 and a recessed part 515a, 515b within one cell region. The recessed part 515a, 515b may include an accommodating part 516a, 516b and a head 517a, 517b.

The bottom plate 500 may include a heat transfer member 70 applied through a nozzle D. The heat transfer member 70 may be applied on the recessed part 515a, 515b. In an embodiment, the heat transfer member 70 may be additionally applied on the cell mounting part 514 in the cell region.

In an embodiment, the heat transfer member 70 may include at least one of a first heat transfer member 76a disposed on the first accommodating part 516a of the first recessed part 515a and a second heat transfer member 76b disposed on the second accommodating part 516b of the second recessed part 515b.

In an embodiment, the heat transfer member 70 may include at least one of a third heat transfer member 77a disposed on the first head 517a of the first recessed part 515a, and a fourth heat transfer member 77b disposed on the second head 517b of the second recessed part 516b.

In an embodiment, the heat transfer member 70 may include a fifth heat transfer member 74 disposed on the cell mounting part 514.

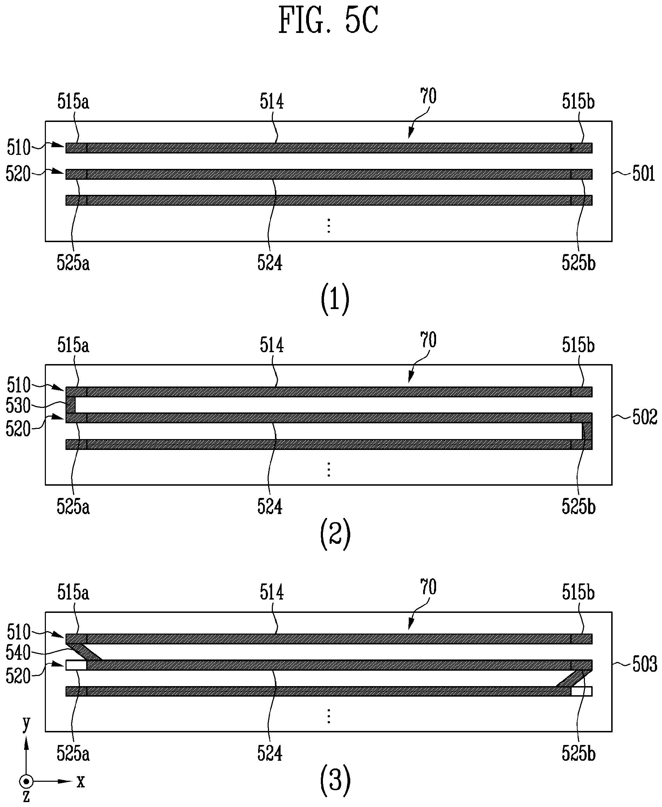

Referring to FIG. 5C, the bottom plate 501, 502, 503 may include a plurality of cell regions 510, 520. For example, the plurality of cell regions 510, 520 may include a first cell region 510 and a second cell region 520 adjacent to each other.

In an embodiment, the heat transfer member 70 may be applied to the first cell region 510 of the bottom plate 501, 502, 503, and then to the second cell region 520 of the bottom plate 501, 502, 503.

For example, referring to FIGS. 5A and (1) of 5C, the heat transfer member 70 may be applied to each region of the first cell region 510 through the moving nozzle D, in the order of the second recessed part 515b, the cell mounting part 514, and the first recessed part 515a of the first cell region 510 of the bottom plate 500, 501. Next, the nozzle D may be moved to the first recessed part 525a of the second cell region 520 while the application of the heat transfer member 70 is stopped. By resuming the application of the heat transfer member 70, the heat transfer member 70 may be applied to each region of the second cell region 520 through the moving nozzle D, in the order of the first recessed part 525a, the cell mounting part 524, and the second recessed part 525b of the second cell region 520. Accordingly, the heat transfer member 70 may be applied only to the required region.

In an embodiment, referring to FIGS. 5A and (2) of 5C, the heat transfer member 70 may be additionally disposed at the region 530 between the recessed part 515a of the first cell region 510 and the recessed part 525a of the second cell region 520 in the bottom plate 500, 502.

For example, in the order of the second recessed part 515b, the cell mounting part 514, and the first recessed part 515a of the first cell region 510 of the bottom plate 500, 502, the heat transfer member 70 may be applied to each region of the first cell region 510 through the moving nozzle D. Next, in the order of the first recessed part 525a, the cell mounting part 524, and the second recessed part 525b of the second cell region 520, the heat transfer member 70 may be applied to each region of the second cell region 520 through the moving nozzle D. In this case, the heat transfer member 70 may be applied to the connection region 530 between the first recessed part 515a of the first cell region 510 and the first recessed part 525a of the second cell region 520 in the bottom plate 500, 502. Accordingly, the heat transfer member 70 may be applied on the bottom plate 500, 502 with a uniform thickness, and the application speed may be rapidly improved.

In an embodiment, referring to FIGS. 5A and (3) of 5C, the heat transfer member 70 may be to the region 540 between the recessed part 515a of the first cell region 510 and the cell mounting part 524 of the second cell region 520 in the bottom plate 500, 503.

For example, in the order of the second recessed part 515b, the cell mounting part 514, and the first recessed part 515a of the first cell region 510 of the bottom plate 500, 503, the heat transfer member 70 may be applied to each region of the first cell region 510 through the moving nozzle D. Next, in the order of the cell mounting part 524 and the second recessed part 525b of the second cell region 520, the heat transfer member 70 may be applied to the cell mounting part 524 and the second recessed part 525b of the second cell region 520 through the moving nozzle D. In this case, the heat transfer member 70 may be applied to the connection region 540 between the first recessed part 515a of the first cell region 510 and the cell mounting part 524 of the second cell region 520 in the bottom plate 500, 503. Further, the heat transfer member 70 may be applied to at least one of the recessed parts 515a, 515b, 525a, 525b included in one cell region 510, 520. Accordingly, the heat transfer member 70 may be applied on the bottom plate 500, 503 with a uniform thickness, and the application speed may be rapidly improved.

In an embodiment, the heat transfer member may be applied on the accommodating part 516a, 516b. For example, the accommodating part 516a, 516b may accommodate the protruding part 15a, 15b (see FIG. 3) in a state where the heat transfer member is applied. For another example, the accommodating part 516a, 516b may accommodate the protruding part 15a, 15b (see FIG. 3) in a state where no heat transfer member is applied.

In an embodiment, the first recessed part 515a of the first cell region 510 and the first recessed part 525a of the second cell region 520 may be disposed as an integral part. For example, the head of the first recessed part 515a of the first cell region 510 and the head of the first recessed part 525a of the second cell region 520 may be integrally connected. In another embodiment, the first recessed part 515a of the first cell region 510 and the first recessed part 525a of the second cell region 520 may be disposed as separate parts.

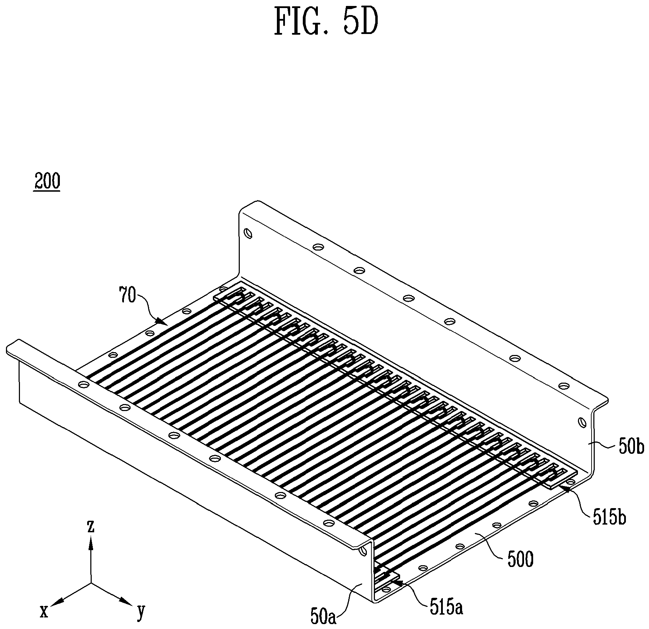

Referring to FIG. 5D, a base plate 200 based on an embodiment may include a bottom plate 500 and a side plate 50a, 50b. The bottom plate 500 may include a recessed part 515a, 515b and heat transfer members 70. The heat transfer member 70 may be applied in the manner described in FIG. 5C described above.

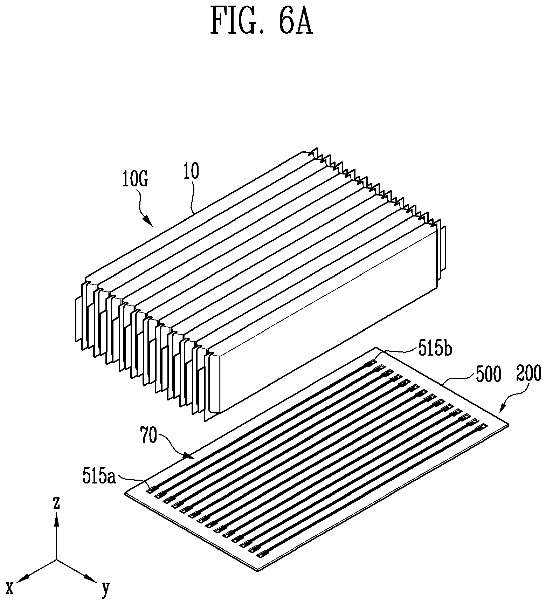

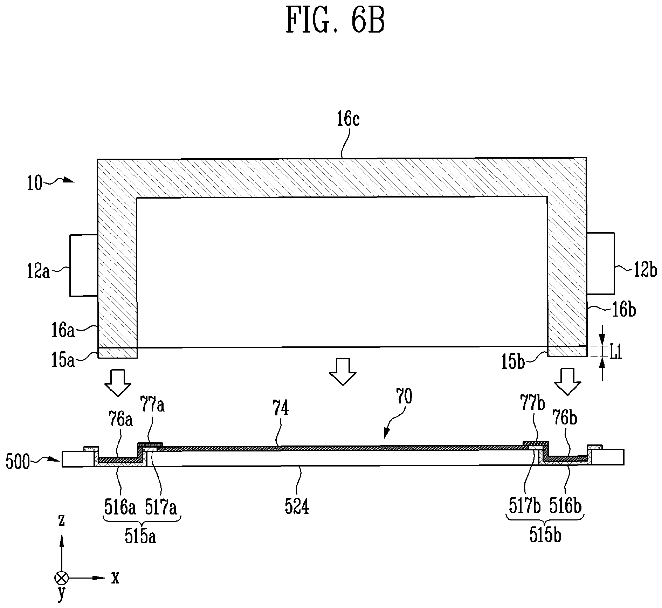

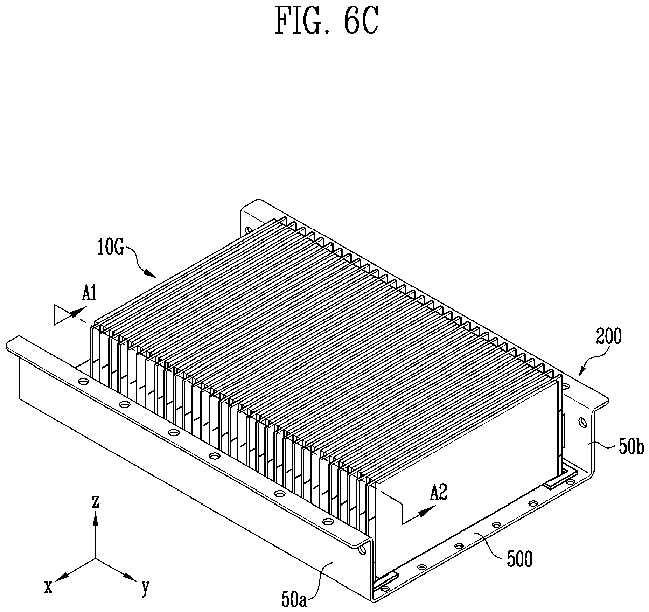

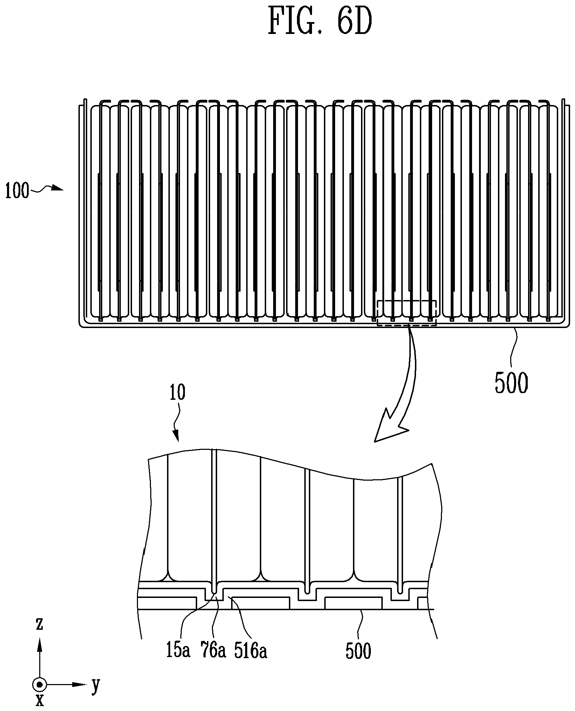

FIGS. 6A to 6D are diagrams illustrating an example coupling of a battery cell and a base plate based on an embodiment of the disclosed technology. FIG. 6A and FIG. 6B show a state before the battery cell 10 is mounted on the base plate 200, FIG. 6C and FIG. 6D show a state in which the battery cell 10 is mounted on the base plate 200, and FIG. 6D shows a cross section A1-A2 of FIG. 6C. The cross section A1-A2 is a surface where the first accommodating part 516a of the first recessed part 515a is located.

Referring to FIGS. 6A to 6D, the battery cell group 10G may be mounted on the base plate 200. Specifically, the battery cell group 10G may be mounted on the bottom plate 500 of the base plate 200 to which the heat transfer member 70 is applied. The battery cell 10 included in the battery cell group 10G may be mounted in each cell region. The battery cell 10 may be coupled to the cell region through the heat transfer member 70.

In an embodiment, the protruding part 15a, 15b of the battery cell 10 may be accommodated in portions of the recessed part 515a, 515b of the bottom plate 500. For example, the first protruding part 15a of the battery cell 10 may be accommodated in the first accommodating part 516a of the first recessed part 515a, and the second protruding part 15b of the battery cell 10 may be accommodated in the second accommodating part 516b of the second recessed part 515b.

In this case, the heat transfer member 70 may be disposed between the protruding part 15a, 15b and the recessed part 515a, 515b. The heat transfer member 70 may function to bond or connect the protruding part 15a, 15b and the recessed part 515a, 515b. In addition, the heat transfer member 70 may function to transfer heat between the protruding part 15a, 15b and the recessed part 515a, 515b.

In an embodiment, the heat transfer member 70 may include at least one of the first heat transfer member 75a and the second heat transfer member 75b. In other words, the heat transfer member 70 may be disposed at least at one of a location between the first recessed part 515a and the first protruding part 15a, or a location between the second recessed part 515b and the second protruding part 15b.

The first heat transfer member 75a may be disposed between the first recessed part 515a and the first protruding part 15a. The first heat transfer member 75a may couple the first recessed part 515a and the first protruding part 15a to each other, and may transfer heat between the first recessed part 515a and the first protruding part 15a. For example, when heat is generated in the first electrode tab 12a, heat of the first electrode tab 12a may be dissipated to the outside through a route such as the first sealing part 16a, the first protruding part 15a, the first heat transfer member 75a and the first accommodating part 516a.

The second heat transfer member 75b may be disposed between the second recessed part515b and the second protruding part15b. The second heat transfer member 75b may couple the second recessed part 515b and the second protruding part 15b to each other and transfer heat between the second recessed part 515b and the second protruding part 15b. For example, heat of the second electrode tab 12b may be dissipated to the outside through a route such as the second sealing part 16b, the second protruding part 15b, the second heat transfer member 75b and the second accommodating part 516b.

In an embodiment, the heat transfer member 70 may include a third heat transfer member 77a disposed on the first head 517a and a fourth heat transfer member 77b disposed on the second head 517b of the second recessed part 516b. In an embodiment, the heat transfer member 70 may include a fifth heat transfer member 74. The third heat transfer member 77a, the fourth heat transfer member 77b, and the fifth heat transfer member 74 may fix the close contact part 14 to the cell mounting part 524. For example, the third heat transfer member 77a, the fourth heat transfer member 77b, and the fifth heat transfer member 74 may be disposed between a region excluding the first protruding part 15a and the second protruding part 15b in the one surface of the exterior material 16 and the cell mounting part.

In an embodiment of the disclosed technology, a battery module 100 includes the battery cell 10 with improved stability. In an embodiment, an area in which the heat transfer member 70 contacts the battery cell 10 and the bottom plate 500 may be increased. Accordingly, the lifespan of the battery cell 10 may be extended by rapidly dissipating heat from the battery cell 10 to the outside. In addition, undesirable movement of the battery cell 10 may be prevented even when there is a physical vibration or impact.

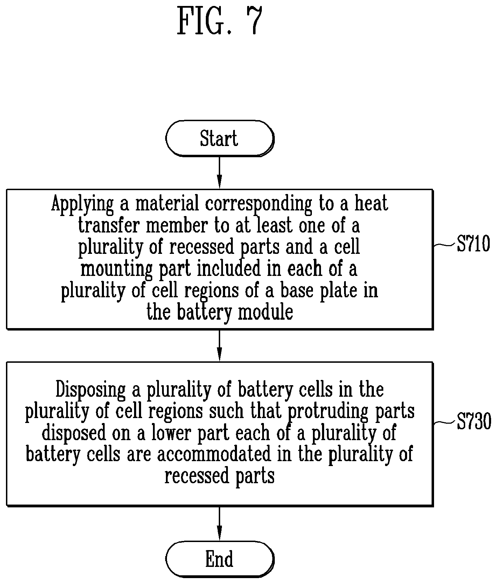

FIG. 7 is a diagram illustrating an example of a manufacturing method of a battery module based on an embodiment of the disclosed technology.

Referring to FIG. 7, a manufacturing method of a battery module 100 may include applying a material corresponding to a heat transfer member to at least one of a plurality of recessed parts and a cell mounting part included in each of a plurality of cell regions of a base plate in the battery module S710, disposing a plurality of battery cells in the plurality of cell regions such that protruding parts disposed on a bottom part each of a plurality of battery cells are accommodated in the plurality of recessed parts S730. Herein, the battery module includes a battery cell and a base plate. In addition, the battery cell comprises an electrode assembly that includes at least one anode and at least one cathode, an exterior material surrounding the electrode assembly, and at least one protruding part disposed on one surface of the exterior material. Further, the base plate comprises a cell mounting part and at least one recessed part arranged at a portion of the cell mounting part, the cell mounting part is structured to mount the battery cells to the battery module.

In an embodiment, the battery cells may be seated on the base plate. In addition, the battery cells may be stacked on the base plate.

In an embodiment, prior to the applying of the material corresponding to the heat transfer member S710, inserting the recessed parts into corresponding penetration holes disposed in the base plate may be further included. Here, each of the plurality of recessed parts may include an accommodating part structured to be inserted into each of the penetration holes and a head contacting a peripheral region of the penetration holes in the base plate.

In an embodiment, heads of the plurality of recessed parts may be integrally connected to each other.

In an embodiment, the plurality of cell regions may include a first cell region and a second cell region adjacent to each other.

In an embodiment, the applying of the heat transfer member S710 may include, after applying the heat transfer member to a recessed part of the first cell region, applying the heat transfer member to a region between the recessed part of the first cell region and the recessed part of the second cell region in the base plate, and after applying the heat transfer member to the recessed part of the second cell region, applying the heat transfer member to a cell mounting part of the second cell region.

In an embodiment, the applying of the heat transfer member S710 may include, after applying the heat transfer member to a recessed part of the first cell region, applying the heat transfer member to a region between the recessed part of the first cell region and the recessed part of the second cell region in the base plate, and applying the heat transfer member to a cell mounting part of the second cell region.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery based energy storage systems (ESSs) to store renewable energy such as solar power and wind power.

While the disclosed technology has been shown and described with reference to certain embodiments thereof, the present disclosure is not limited to the embodiments, and various modifications and changes may be made to the disclosed embodiments and other embodiments may be made based on what is disclosed in this patent document.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the disclosed technology, and the disclosed technology is not limited thereto. Accordingly, various modifications can be made based on what is disclosed in this patent document.

## Claims

1. A battery module, comprising:
a battery cell comprising an electrode assembly that includes at least one anode and at least one cathode, an exterior material surrounding the electrode assembly, and at least one protruding part disposed on one surface of the exterior material;
a base plate comprising a cell mounting part and at least one recessed part arranged at a portion of the cell mounting part, the cell mounting part is structured to mount the battery cells to the battery module; and
a heat transfer member disposed between the at least one recessed part and the at least one protruding part.

2. The battery module of claim 1, wherein the at least one recessed part comprises a first recessed part located at one end of the cell mounting part and a second recessed part located at another end of the cell mounting part, and
the at least one protruding part comprises, on the lower surface of the exterior material, a first protruding part disposed at a location corresponding to the first recessed part and a second protruding part disposed at a location corresponding to the second recessed part.

3. The battery module of claim 2, wherein the heat transfer member comprises at least one of a first heat transfer member disposed between the first recessed part and the first protruding part and a second heat transfer member disposed between the second recessed part and the second protruding part and
wherein the heat transfer member comprises a third heat transfer member disposed between a region other than the first protruding part and the second protruding part on the one surface of the exterior material, and the cell mounting part.

4. The battery module of claim 2 or 3, wherein the exterior material comprises a first sealing part disposed at one end of the electrode assembly and a second sealing part disposed at another end of the electrode assembly, and
the first protruding part is located on a bottom surface of the first sealing part, and the second protruding part is located on a bottom surface of the second sealing part.

5. The battery module of any one of claims 1 to 4, wherein the base plate comprises a bottom plate supporting the cell mounting part and the at least one recessed part, a first side plate coupled to a first end of the bottom plate, and a second side plate coupled to a second end of the bottom plate.

6. The battery module of claim 5, further comprising:
a cover plate located over the battery cell,
a first electrode tab connected to a first part of the electrode assembly as part of the battery cell;
a second electrode tab, separated from the first electrode tab, and connected to a second part of the electrode assembly as part of the battery cell;
a first busbar assembly disposed between the first side plate and the battery cell, and connected to the first electrode tab of the battery cell; and
a second busbar assembly disposed between the second side plate and the battery cell, and connected to the second electrode tab of the battery cell, and
wherein a first end of the cover plate is coupled to an upper end of the first side plate, and a second end of the cover plate is coupled to an upper end of the second side plate.

7. A battery module, comprising:
a base plate comprising a plurality of cell regions each comprising a cell mounting part, recessed parts having a lower height than the cell mounting part, and a heat transfer member applied to at least one of the recessed parts; and
a battery cell group including a plurality of battery cells stacked in a row, each of the plurality of battery cells comprising an electrode assembly that includes electrodes of a battery cell, an exterior material surrounding the electrode assembly, and protruding parts disposed on a one surface of the exterior material,
wherein the recessed parts of the base plate are structured to accommodate corresponding protruding parts of the plurality of battery cells.

8. The battery module of claim 7, wherein each of the recessed parts comprises an accommodating part and a head, wherein the accommodating part is structured to be inserted into a penetration hole of the base plate, and the head is structured to be connected to an upper surface of the accommodating part and in contact with an upper surface of the base plate.

9. The battery module of claim 7 or 8, wherein the recessed parts comprise a first recessed part located at one end of the cell mounting part and a second recessed part located at another end of the cell mounting part, and
the protruding parts comprise, on the one surface of the exterior material, a first protruding part disposed at a location corresponding to the first recessed part and a second protruding part disposed at a location corresponding to the second recessed part.

10. The battery module of claim 9, wherein the heat transfer member is disposed at least at one of a location between the first recessed part and the first protruding part or a location between the second recessed part and the second protruding part, and
wherein the heat transfer member is additionally disposed at a location between a region other than the first protruding part and the second protruding part on the one surface of the exterior material, and the cell mounting part.

11. The battery module of any one of claims 7 to 10, wherein the plurality of cell regions comprises a first cell region and a second cell region adjacent to each other, and
the heat transfer member is additionally disposed at a region between a recessed part of the first cell region and a recessed part of the second cell region in the base plate.

12. A manufacturing method of a battery module comprising a battery cell and a base plate, the manufacturing method comprising:
wherein the battery cell comprising an electrode assembly that includes at least one anode and at least one cathode, an exterior material surrounding the electrode assembly, and at least one protruding part disposed on one surface of the exterior material,
wherein the base plate comprising a cell mounting part and at least one recessed part arranged at a portion of the cell mounting part, the cell mounting part is structured to mount the battery cells to the battery module,
applying a material corresponding to a heat transfer member to at least one of the plurality of recessed parts and the cell mounting part included in each of the plurality of cell regions of the base plate in the battery module; and
disposing a plurality of battery cells in the plurality of cell regions such that protruding parts disposed on a bottom part of each of the plurality of battery cells are accommodated in the plurality of recessed parts.

13. The manufacturing method of claim 12, further comprising:
inserting the recessed parts into corresponding penetration holes disposed in the base plate before applying the material corresponding to the heat transfer member to at least one of the plurality of recessed parts,
wherein each of the plurality of recessed parts comprises an accommodating part structured to be inserted into each of the penetration holes and a head contacting a peripheral region of the penetration holes in the base plate, and
wherein heads of the plurality of recessed parts are integrally connected to each other.

14. The manufacturing method of claim 12 or 13, wherein the plurality of cell regions comprises a first cell region and a second cell region adjacent to each other, and
the applying of the heat transfer member comprises:
after applying the heat transfer member to the recessed part of the first cell region, applying the heat transfer member to a region between the recessed part of the first cell region and the recessed part of the second cell region in the base plate; and
after applying the heat transfer member to the recessed part of the second cell region, applying the heat transfer member to the cell mounting part of the second cell region.

15. The manufacturing method of any one of claims 12 to 14, wherein the plurality of cell regions comprises a first cell region and a second cell region adjacent to each other, and
the applying of the heat transfer member comprises:
after applying the heat transfer member to the recessed part of the first cell region, applying the heat transfer member to a region between the recessed part of the first cell region and the recessed part of the second cell region in the base plate; and
applying the heat transfer member to the cell mounting part of the second cell region.
